# EUROPÄISCHE PATENTANMELDUNG

(11) **EP 1 274 158 A1**
(43) Veröffentlichungstag der Anmeldung: **08.01.2003**
(21) Anmeldenummer: 02011340.3
(22) Anmeldetag: 23.05.2002
(51) Int. Cl.: H02B 1/38

(54) **Schrank, insbesondere Geräteschrank**

(30) Priorität: 04.07.2001 DE 10132263
(71) Anmelder: SIEMENS AKTIENGESELLSCHAFT, 80333 München (DE)
(72) Erfinder: Niggl, Heinz-Juergen, 82343 Pöcking (DE)
(74) Vertreter: Berg, Peter, Dipl.-Ing.

(57) **Zusammenfassung**

Die Erfindung betrifft einen Schrank (10), insbesondere Geräteschrank zum Einbau elektronischer Geräte, mit wenigstens einer Schranktür (11). Erfindungsgemäß ist vorgesehen, daß auf einander entgegengesetzten Abschnitten (13, 13') der Schranktür (11) jeweils eine Schließeinrichtung (14-19, 22; 14'-19', 22') vorgesehen ist, der jeweils eine Schwenkeinrichtung (15-19, 15'-19') zugeordnet ist, wobei die jeweilige Schließeinrichtung (14-19, 22; 14'-19', 22') und die ihr zugeordnete Schwenkeinrichtung (15-19, 15'-19') derart gekoppelt sind, daß in Abhängigkeit von einer Betätigungsstellung der jeweiligen Schließeinrichtung (14-19, 22; 14'-19', 22') die zugeordnete Schwenkeinrichtung (15-19, 15'-19') aktiviert oder deaktiviert ist. Dabei sind die jeweilige Schließeinrichtung (14-19, 22; 14'-19', 22') und die zugeordnete Schwenkeinrichtung (15-19, 15'-19') kombiniert ausgebildet, so daß jeder der beiden Abschnitte (13, 13') der Schranktür (11) eine Schließeinrichtung (14-19, 22; 14'-19', 22') und eine zugeordnete Schwenkeinrichtung (15-19, 15'-19') aufweist.

## Beschreibung

Die Erfindung betrifft einen Schrank, insbesondere Geräteschrank zum Einbau elektronischer Geräte, mit wenigstens einer Schranktür, wobei die Schranktür wenigstens eine Schließeinrichtung und eine Schwenkeinrichtung aufweist.

Bei derartigen Schränken ist an einem Türabschnitt eine Schließeinrichtung und auf einem gegenüberliegenden Türabschnitt eine Scharnier- bzw. Schwenkeinrichtung angeordnet, so daß sich die Schranktür nach einer Richtung öffnen läßt. Unbefriedigend bei diesem Stand der Technik ist, daß die Drehseite der Schranktür werksseitig bereits festgelegt ist, so daß eine Änderung der Drehrichtung vor Ort durch entsprechende Umbauten entweder praktisch ausgeschlossen oder mit zeitraubendem konstruktiven Aufwand verbunden ist.

Es besteht daher die Aufgabe, einen Schrank bereitzustellen, bei dem sich die Schranktür auf einfache Weise nach beiden Seiten öffnen läßt.

Gelöst ist diese Aufgabe dadurch, daß auf einander entgegengesetzten Abschnitten der Schranktür jeweils eine Schließeinrichtung vorgesehen ist, der jeweils eine Schwenkeinrichtung zugeordnet ist, wobei die jeweilige Schließeinrichtung und die ihr zugeordnete Schwenkeinrichtung derart gekoppelt sind, daß in Abhängigkeit von einer Betätigungsstellung der jeweiligen Schließeinrichtung die zugeordnete Schwenkeinrichtung aktiviert oder deaktiviert ist.

Indem jeder der beiden Abschnitte der Tür sowohl eine Schließeinrichtung als auch eine Schwenkeinrichtung aufweist, ist wahlweise der eine oder andere Abschnitt als Schwenkseite definierbar, indem durch entsprechende Betätigung einer Schließeinrichtung die dazu korrespondierende Schwenkeinrichtung aktiviert ist und die jeweils andere Schließeinrichtung so betätigt wird, daß die dazu korrespondierende Schwenkeinrichtung deaktiviert ist.

Nach einer bevorzugten Ausgestaltung der Erfindung sind die jeweilige Schließeinrichtung und die zugeordnete Schwenkeinrichtung kombiniert ausgebildet, so daß jeder der beiden Abschnitte der Schranktür eine Schließeinrichtung und eine zugeordnete Schwenkeinrichtung aufweist. Eine Ausgestaltung der Erfindung, mit der die Schwenkseite der Schranktür auf einfache Weise einstellbar ist, sieht vor, daß die jeweilige Schließeinrichtung in Schließstellung die zugeordnete Schwenkeinrichtung so betätigt, daß die Schwenkeinrichtung den zugeordneten Abschnitt der Schranktür an den Schrankrahmen ankoppelt, während die jeweilige Schließeinrichtung in Offenstellung die zugeordnete Schwenkeinrichtung so betätigt, daß die Schwenkeinrichtung den zugeordneten Abschnitt der Schranktür von dem Schrankrahmen entkoppelt. Dazu weist jede Schwenkeinrichtung wenigstens eine von der zugeordneten Schließeinrichtung betätigbare Schubstange auf, welche in Schließstellung der zugeordneten Schließeinrichtung in zugeordneten Scharnierhülsen aufgenommen ist und in Offenstellung von diesen Scharnierhülsen entkoppelt ist. Die jeweilige Schubstange fungiert somit im aktivierten Zustand als in den am Schrankrahmen angeordneten Scharnierhülsen gelagerte Schwenkachse. Eine Weiterbildung der Erfindung sieht vor, daß jede Schubstange zweiteilig ausgebildet ist, wobei ihre einander zugewandten Enden derart in der zugeordneten Schließeinrichtung aufgenommen sind, daß sie mit einem dort drehbar aufgenommenen Riegel gekoppelt sind. Die Betätigung der jeweiligen Schließeinrichtungen erfolgt somit durch Drehen des jeweils zugeordneten Riegels. Da die axiale Auslenkung der beiden Teile der jeweiligen Schubstange von der Drehstellung des jeweils zugeordneten Riegels abhängig ist, läßt sich anhand einer bestimmten Drehstellung des jeweiligen Riegels festlegen, ob die entsprechende Schubstange in die ihr zugeordneten Scharnierhülsen eingreift oder nicht.

Weitere vorteilhafte Ausgestaltungen der Erfindung sind den Unteransprüchen zu entnehmen.

Anhand der beigefügten Zeichnung soll nachstehend eine Ausführungsform des erfindungsgemäßen Schranks näher erläutert werden. In stark schematischen Ansichten zeigen:
Fig. 1 eine stirnseitige Ansicht eines Ausschnitts des erfindungsgemäßen Schranks mit einer Schranktür, wobei die Schranktür auf gegenüberliegenden Abschnitten jeweils eine Schließeinrichtung und eine Schwenkeinrichtung aufweist, die so betätigt sind, daß die Schranktür geschlossen ist,
Fig. 2 den erfindungsgemäßen Schrank von Fig. 1, wobei die linksseitig angeordnete Schließeinrichtung geschlossen und die rechtsseitig angeordnete Schließeinrichtung geöffnet ist, so daß die Schranktür nach links verschwenkbar ist, und
Fig. 3 den Schrank von Fig. 1, wobei die linksseitig angeordnete Schließeinrichtung geöffnet und die rechtsseitig angeordnete Schließeinrichtung geschlossen ist, so daß die Schranktür nach rechts verschwenkbar ist.

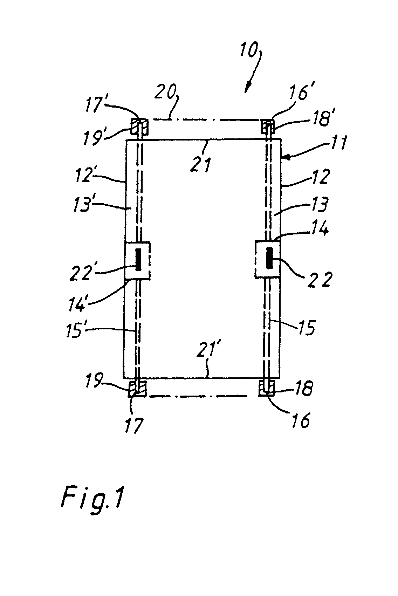

Fig. 1 zeigt einen im ganzen mit 10 bezeichneten Schrank mit einer Schranktür 11, wobei die Schranktür 11 an einem an die rechtsseitige Vertikalkante 12 angrenzenden Abschnitt 13 eine Schließeinrichtung 14 aufweist. Eine zweite Schließeinrichtung 14' ist an einem zum Abschnitt 13 entgegensetzt angeordneten Abschnitt 13' vorgesehen, welcher an die linksseitige Vertikalkante 12' angrenzt. Jeder der Abschnitte 13, 13' weist jeweils eine sich vertikal erstreckende Schubstange 15, 15' auf, welche mit der jeweils zugeordneten Schließeinrichtung in Kontakt steht. Den voneinander abgewandten freien Enden 16, 16', 17, 17' der jeweiligen Schubstange 15, 15' ist jeweils eine Scharnierhülse 18, 18', 19, 19' zugeordnet, die am Schrankrahmen 20 vorgesehen sind. Dadurch sind zwei Paare von Scharnierhülsen 18, 18', 19, 19' am Schrankrahmen 20 angeordnet, wobei jedem Paar einer der beiden Abschnitte 13, 13' der Schranktür 11 zugeordnet ist; bei zugeklappter Schranktür 11 fluchten eine oberseitig zur Schranktür 11 angeordnete Scharnierhülse 18', 19' und eine unterseitig zur Schranktür angeordnete Scharnierhülse 18, 19 jedes Paares mit den freien Enden 16, 16', 17, 17' der jeweils dem Paar zugeordneten Schubstange 15 bzw. 15', so daß die zu einem Paar gehörenden Scharnierhülsen 18, 18', 19, 19' vertikal fluchtend angeordnet sind und die beiden je zwei Scharnierhülsen umfassenden Paare einen horizontalen Abstand aufweisen, der dem horizontalen Abstand der beiden Schubstangen 15 bzw. 15' und somit dem horizontalen Abstand der Schließeinrichtungen 14 bzw. 14' entspricht.

Bei dem in Fig. 1 veranschaulichten Ausführungsbeispiel des Schrankes 10 befindet sich die Schranktür 11 in geschlossenem Zustand, wobei die freien Enden 16, 16', 17, 17' der beiden horizontal beabstandeten Schubstangen 15 bzw. 15', jeweils über die oberseitige und unterseitige Begrenzungskante 21 bzw. 21' der Schranktür 11 hinausragen und in die jeweils zugeordneten Scharnierhülsen 18, 18', 19, 19', die am Schrankrahmen 20 vorgesehen sind, eingreifen. Dazu ist jede Schubstange 15, 15' zweiteilig ausgebildet, wobei die einander zugewandten Enden in der zwischengeordneten Schließeinrichtung 14 bzw. 14' aufgenommen sind und die jeweiligen Enden in Kontakt mit einem von der Schließeinrichtung 14 bzw. 14' umfassten Riegel 22 bzw. 22' stehen; dieser Riegel 22, 22' ist drehbar mit einer senkrecht zur Schranktürebene und somit senkrecht zur Längserstreckungsrichtung der jeweiligen Schubstange 15, 15' verlaufenden Drehachse ausgebildet, wobei die Drehachse etwa mittig in dem Riegel 22, 22' angeordnet ist, so daß die von der Drehachse wegstehenden Flügel gleiche Länge aufweisen. In der in Fig. 1 dargestellten Schließstellung der Schließeinrichtungen 14, 14' sind die jeweiligen Riegel 22, 22' in ihrer Längserstreckung vertikal ausgerichtet, wobei deren Flügel mit der Längsachse der jeweils zugeordneten Schubstange 15, 15' fluchten; die einander zugewandten Enden der jeweiligen Schubstange 15, 15' befinden sich dabei im Anschlag mit den ihnen jeweils zugewandten Flügeln des zugeordneten Riegels 22 bzw. 22'. Dadurch sind die beiden Teile der jeweiligen Schubstange 15, 15' so ausgelenkt, daß die von einander abgewandten Enden 16, 16', 17, 17' der Schubstange 15, 15' über die ober- und unterseitigen Begrenzungskanten 21, 21' der Schranktür 11 herausragen und in die jeweils zugeordneten Scharnierhülsen 18, 18', 19, 19' eingreifen, welche ober- und unterseitig am Schrankrahmen 20 angeordnet sind. Die Enden der Schubstangen 15, 15' haben jeweils einen kreisförmigen Querschnitt, während die zugeordneten Scharnierhülsen jeweils eine dazu angepaßte hohizylinderförmige Aufnahmebohrung aufweisen. Durch das Eingreifen in die zugeordneten Scharnierhülsen 18, 18', 19, 19' fungieren die jeweils zu einem Paar angeordneten Scharnierhülsen als Schwenklager für die mit ihren freien Enden 16, 16', 17, 17' darin verankerte Schubstange 15 bzw. 15'. Da jedoch bei dem in Fig. 1 gezeigten Zustand beide Schließeinrichtungen 14 bzw. 14', die im übrigen identisch ausgebildet sind, ihre Schließstellung einnehmen, wobei die jeweils zugeordneten Riegel 22 bzw. 22' vertikal ausgerichtet sind, greifen beide Schubstangen 15, 15' in die entsprechend zugeordneten Scharnierhülsen 18, 18', 19, 19' ein und sind somit dort gelagert, so daß kein Freiheitsgrad zur Betätigung der Schranktür 11 vorhanden und demgemäß die Schranktür 11 verriegelt bzw. geschlossen ist. Beide Schubstangen 15, 15' sind im übrigen identisch ausgebildet.

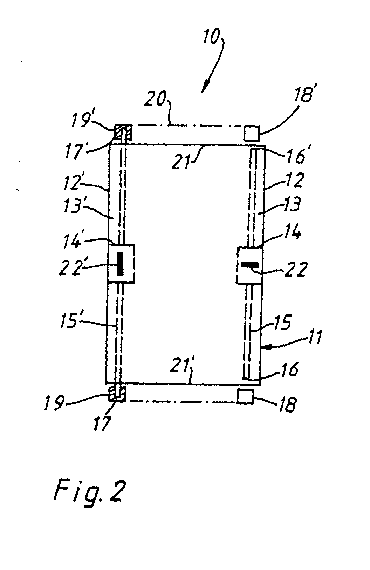

Fig. 2 zeigt den Schrank 10 in einem Zustand, in dem die Schranktür nach links öffenbar ist. Dazu ist die linksseitig angeordnete Schließeinrichtung 14' so betätigt, daß der zugeordnete Riegel 22' vertikal ausgerichtet ist und die von dieser Schließeinrichtung 14' betätigte Schubstange mit ihren freien Enden 17, 17' in die zugeordneten Scharnierhülsen 19, 19' eingreift. Demgegenüber ist die rechtsseitig angeordnete Schließeinrichtung 14 so betätigt, daß der zugeordnete Riegel 22 quer zur Längserstreckungsrichtung der entsprechenden Schubstange 15, d.h. etwa horizontal, ausgerichtet ist. Dadurch beaufschlagen die in der Schließeinrichtung 14 aufgenommenen einander zugewandten Enden der Schubstange 15 die jeweiligen Schmalseiten des Riegels 22 und weisen demgemäß einen geringeren Abstand voneinander auf als in der Schließstellung. Aufgrund des reduzierten Abstands sind die beiden Teile der Schubstange 15 so zurückgezogen, daß die freien Enden 16, 16' nicht über die ober- und unterseitigen Begrenzungskanten 21, 21' der Schranktür 11 vorstehen und demgemäß außer Eingriff der zugeordneten Scharnierhülsen 18, 18' sind. Die axiale Auslenkung der beiden Teile der jeweiligen Schubstange 15, 15' ist somit von der Drehstellung des jeweils zugeordneten Riegels 22, 22' abhängig. Die rechtsseitig angeordnete Schließeinrichtung 14 befindet sich somit in ihrer Offenstellung. Da somit die auf dem rechtsseitigen Abschnitt 13 der Schranktür 11 angeordnete Schließeinrichtung 14 entriegelt ist, während auf dem linksseitigen Abschnitt 13' die in der dort angeordneten Schließeinrichtung 14' aufgenommene Schubstange 15' mit ihren freien Enden 17, 17' in den zugeordneten Scharnierhülsen 19, 19' schwenkbar gelagert ist, ist die Schranktür 11 in diesem Zustand an ihrem freien rechtsseitigen Abschnitt 13 nach links in Richtung des linksseitigen Abschnitts 13' verschwenkbar, wobei die Schwenkachse durch die Längsachse der Schubstange 15' definiert ist.

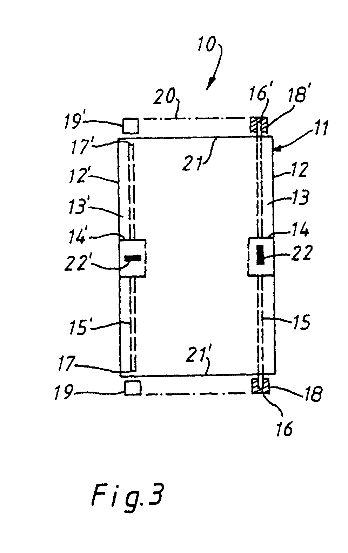

Fig. 3 zeigt den Schrank 10 in einem anderen Zustand, in dem die Schranktür 11 nach rechts öffenbar ist. Gegenüber dem in Fig. 2 dargestellten Zustand der Schließeinrichtungen 14, 14' sind in Fig. 3 die Funktionsstellungen der Schließeinrichtungen 14, 14' jeweils invertiert. Dabei ist die linksseitig angeordnete Schließeinrichtung 14' so betätigt, daß der zugeordnete Riegel 22' quer zur Längserstreckung der entsprechenden Schubstange 15' ausgerichtet ist. Dadurch beaufschlagen die in der Schließeinrichtung 14' aufgenommenen einander zugewandten Enden der Schubstange 15' die jeweiligen Schmalseiten des Riegels 22' und weisen somit einen gegenüber der Schließstellung reduzierten Abstand voneinander auf. Aufgrunddessen ragen die freien Enden 17, 17' der Schubstange 15' nicht über die ober- und unterseitigen Begrenzungskanten 21, 21' der Schranktür 11 hinaus, so daß sie zu den zugeordneten Scharnierhülsen 19, 19' jeweils axial beabstandet und außer Eingriff sind. Der zugeordnete linksseitige Abschnitt 13' der Schranktür 11 ist somit frei. Demgegenüber befindet sich die auf dem rechtsseitigen Abschnitt 13 der Schranktür 11 angeordnete Schließeinrichtung 14 in Schließstellung, wobei der zugeordnete Riegel 22 so ausgerichtet ist, daß seine Längsachse mit der Längserstreckungsrichtung der zugeordneten Schubstange 15 fluchtet. In dieser vertikal ausgerichteten Lage kommen die einander zugewandten Enden der beiden Teile der Schubstange 15 in Anschlag zu den Flügelenden des zugeordneten Riegels 22; beide Teile der Schubstange 15 erfahren dadurch eine gegensinnige Translation in ihrer Längsachse in Richtung der jeweils zugeordneten Scharnierhülsen 18 bzw. 18', so daß die jeweils freien Enden 16, 16' der Schubstange 15 in diese Scharnierhülsen eingreifen und dort schwenkbar gelagert sind. In diesem Zustand ist die Schranktür 11 an ihrem freien linksseitigen Abschnitt 13' nach rechts in Richtung des rechtsseitigen Abschnitts 13 verschwenkbar, wobei die Schwenkachse durch die Längsachse der Schubstange 15 definiert ist.

Bei einem weiteren - nicht gesondert dargestellten - Zustand des erfindungsgemäßen Schrankes 10 sind sowohl die linksseitige als auch die rechtsseitige Schließeinrichtung so betätigt, daß die Riegel 22, 22' horizontal ausgerichtet sind, so daß die von den Schließeinrichtungen 14, 14' betätigten Schubstangen 15, 15' außer Eingriff bezüglich der jeweils zugeordneten Scharnierhülsen 18, 18', 19, 19' sind. Demgemäß sind sowohl der linksseitige Abschnitt 13' als auch der rechtsseitige Abschnitt 13 der Schranktür 11 frei, so daß in diesem Zustand der Schließeinrichtungen und der Schubstangen eine einfache Montage und Demontage der Schranktür 11 möglich ist.

### Bezugszeichenliste

- 10: Schrank
- 11: Schranktür
- 12: rechtsseitige Vertikalkante
- 12': linksseitige Vertikalkante
- 13: Abschnitt
- 13': Abschnitt
- 14: Schließeinrichtung
- 14': Schließeinrichtung
- 15: Schubstange
- 15': Schubstange
- 16: freies Ende
- 16: freies Ende
- 17: freies Ende
- 17': freies Ende
- 18: Scharnierhülse
- 18': Scharnierhülse
- 19: Scharnierhülse
- 19': Scharnierhülse
- 20: Schrankrahmen
- 21: oberseitige Begrenzungskante
- 21': unterseitige Begrenzungskante
- 22: Riegel
- 22': Riegel

## Patentansprüche

1. Schrank, insbesondere Geräteschrank zum Einbau elektronischer Geräte, mit wenigstens einer Schranktür, wobei die Schranktür wenigstens eine Schließeinrichtung und wenigstens eine Schwenkeinrichtung aufweist,
**dadurch gekennzeichnet,**
**daß** auf einander entgegengesetzten Abschnitten (13, 13') der Schranktür (11) jeweils eine Schließeinrichtung (14-19, 22; 14'-19', 22') vorgesehen ist, der jeweils eine Schwenkeinrichtung (15-19, 15'-19') zugeordnet ist, wobei die jeweilige Schließeinrichtung (14-19, 22; 14'-19', 22') und die ihr zugeordnete Schwenkeinrichtung (15-19, 15'-19') derart gekoppelt sind, daß in Abhängigkeit von einer Betätigungsstellung der jeweiligen Schließeinrichtung (14-19, 22; 14'-19', 22') die zugeordnete Schwenkeinrichtung (15-19, 15'-19') aktiviert oder deaktiviert ist.

2. Schrank nach Anspruch 1, **dadurch gekennzeichnet, daß** die jeweilige Schließeinrichtung (14-19, 22; 14'-19', 22') und die zugeordnete Schwenkeinrichtung (15-19, 15'-19') kombiniert ausgebildet sind.

3. Schrank nach Anspruch 1 oder 2, **dadurch gekennzeichnet, daß** die jeweilige Schließeinrichtung (14-19, 22; 14'-19', 22') in Schließstellung die zugeordnete Schwenkeinrichtung (15-19, 15'-19') so betätigt, daß die Schwenkeinrichtung (15-19, 15'-19') den zugeordneten Abschnitt (13, 13') der Schranktür (11) an den Schrankrahmen (20) ankoppelt.

4. Schrank nach einem der Ansprüche 1 bis 3, **dadurch gekennzeichnet, daß** die jeweilige Schließeinrichtung (14-19, 22; 14'-19', 22') in Offenstellung die zugeordnete Schwenkeinrichtung (15-19, 15'-19') so betätigt, daß die Schwenkeinrichtung (15-19, 15'-19') den zugeordneten Abschnitt (13, 13') der Schranktür (11) von dem Schrankrahmen (20) entkoppelt.

5. Schrank nach einem der Ansprüche 1 bis 4, **dadurch gekennzeichnet, daß** jede Schwenkeinrichtung (15-19, 15'-19') wenigstens eine von der zugeordneten Schließeinrichtung (14-19, 22; 14'-19', 22') betätigbare Schubstange (15, 15') aufweist, welche in Schließstellung der zugeordneten Schließeinrichtung (14-19, 22; 14'-19', 22') in zugeordneten Scharnierhülsen (18, 18'; 19, 19') aufgenommen ist und in Offenstellung von diesen Scharnierhülsen (18, 18'; 19, 19') entkoppelt ist.

6. Schrank nach Anspruch 5, **dadurch gekennzeichnet, daß** jede Schubstange (15, 15') zweiteilig ausgebildet ist, wobei ihre einander zugewandten Enden (16, 16'; 17, 17') derart in der zugeordneten Schließeinrichtung (14, 14') aufgenommen sind, daß sie mit einem dort drehbar aufgenommenen Riegel (22, 22') gekoppelt sind.

7. Schrank nach Anspruch 6, **dadurch gekennzeichnet, daß** die axiale Auslenkung der beiden Teile der jeweiligen Schubstange (15, 15') von der Drehstellung des jeweils zugeordneten Riegels (22, 22') abhängig ist.

8. Schrank nach einem der Ansprüche 5 bis 7, **dadurch gekennzeichnet, daß** die der jeweiligen Schließeinrichtung (14-19, 22; 14'-19', 22') zugeordneten Scharnierhülsen (18, 18'; 19, 19') so am Schrankrahmen (20) angeordnet sind, daß sie bei geschlossener Schranktür (11) koaxial zur Längsachse der zugeordneten Schubstange (15, 15') fluchten.

9. Schrank nach Anspruch 8, **dadurch gekennzeichnet, daß** die jeweils aktivierte Schwenkachse der Schranktür (11) durch die Längsachse der entsprechenden Schubstange (15, 15') definiert ist.
